# EUROPEAN PATENT APPLICATION

(11) **EP 2 339 370 A1**
(43) Date of publication of application: **29.06.2011**
(21) Application number: 10194907.1
(22) Date of filing: 14.12.2010
(51) Int. Cl.: G01S 13/90

(54) **Distributed sensor SAR processing system**

(30) Priority: 18.12.2009 US 642224
(71) Applicant: Raytheon Company, Waltham, MA 02451-1449 (US)
(72) Inventor: Samaniego, Raymond, Plano, TX 75025-4542 (US); Tomich, John L, Coppell, TX 75019 (US)
(74) Representative: Lawrence, John

(57) **Abstract**

According to one embodiment, a synthetic aperture radar (SAR) processing system (10) includes multiple radar receivers (16) and a corresponding multiple location determining devices (18) communicating with a SAR processor (12). The SAR processor (12) receives return envelopes from each radar receiver indicative of electro-magnetic energy reflected from a target (22) of interest. The SAR processor also receives, from multiple location determining devices (18) that are each configured with each radar receiver (16), a location signal representing the position of its associated radar receiver, and generates imagery of the target according to the received envelopes and the position associated with each received envelope.

## Description

### TECHNICAL FIELD OF THE DISCLOSURE

This disclosure generally relates to synthetic aperture radar (SAR) processing systems, and more particularly, to a SAR processing system having multiple distally located radar receivers that are each configured with a location determining device for indicating the position of its associated radar receiver during acquisition of radar signals.

### BACKGROUND OF THE DISCLOSURE

Radars detect targets by transmitting a beam of electro-magnetic energy toward the target and measuring the electro-magnetic energy reflected from the target. Synthetic aperture radar (SAR) is a signal processing technique that may be implemented for use with radars to form imagery by processing reflected electro-magnetic energy acquired at differing orientations and positions relative to the target. Imagery generated by synthetic aperture radars are often used for detection of objects that may be otherwise difficult to obtain using other imagery generating devices such as video cameras that generate imagery using visible light.

### SUMMARY OF THE DISCLOSURE

According to one embodiment, a synthetic aperture radar (SAR) processing system includes multiple radar receivers and a corresponding multiple location determining devices communicating with a SAR processor. The SAR processor receives return envelopes from each radar receiver indicative of electro-magnetic energy reflected from a target of interest. The SAR processor also receives, from multiple location determining devices that are each configured with each radar receiver, a location signal representing the position of its associated radar receiver, and generates imagery of the target according to the received envelopes and the position associated with each received envelope.

Some embodiments of the disclosure may provide numerous technical advantages. For example, one embodiment of the SAR processing system may provide enhanced imagery over conventional SAR processing systems. Each radar receiver is configured with a location determining device that indicates the position of its associated radar receiver during acquisition of reflected electro-magnetic energy reflected from a target of interest. Using this topology, enhanced imagery may be provided by positioning the multiple radar receivers at disparate locations from one another to enhance the angular separation of radar returns obtained by the radar receivers.

Some embodiments may benefit from some, none, or all of these advantages. Other technical advantages may be readily ascertained by one of ordinary skill in the art.

Optionally, the synthetic aperture radar system may have at least one radar receiver and its associated location determining device may be configured in a hand-held housing.

The location determining device may comprise a device selected from the group consisting of a global positioning device (GPS) device, a local positioning device (LPS) device, and a hybrid positioning device.

In the method at least one radar receiver and its associated location determining device may be configured in a hand-held housing.

In the method the location determining device may comprise a device selected from the group consisting of a global positioning device (GPS) device, a local positioning device (LPS) device, and a hybrid positioning device.

In another aspect, the invention comprises code implemented on a computer-readable medium, when executed by a computer, operable to perform at least the following:
receive a plurality of return envelopes from a plurality of radar receivers, each return envelope representing electro-magnetic energy reflected from a target;
receive, from each of a plurality of location determining devices that are each configured with each radar receiver, a location signal indicating a position of its associated radar; and
generate imagery of the target according to the plurality of received envelopes and the position associated with each received envelope.

The code may be further operable to generate the electro-magnetic energy using a single radar transmitter.

The code may be further operable to:
generate the electro-magnetic energy using a single radar transmitter; and
synchronize the plurality of radar receivers with one another.

The code may be further operable to:
generate the electro-magnetic energy using a plurality of radar transmitters;
   and
receive the plurality of return envelopes non-concurrently with one another.

The code of may be further operable to generate the electro-magnetic energy at a plurality of different frequencies.

The code may be such that at least one radar receiver and its associated location determining device are configured in a land-based vehicle or an aircraft, or such that at least one radar receiver and its associated location determining device are configured in a hand-held housing.

The code may be further operable to:
receive, from each location determining device, an orientation signal indicating an orientation of its associated radar relative to the target; and
generate the imagery of the target according to the orientation associated with each received envelope.

The location determining device may comprise a device selected from the group consisting of a global positioning device (GPS) device, a local positioning device (LPS) device, and a hybrid positioning device.

The code may be further operable to:
receive the plurality of return envelopes each representing electro-magnetic energy generated at a plurality of different frequencies ranging from 0.5 to 2.0 Giga-Hertz; and
generate imagery of one or more internal features of a building according to the plurality of return envelopes, the building comprising the target.

### BRIEF DESCRIPTION OF THE DRAWINGS

A more complete understanding of embodiments of the disclosure will be apparent from the detailed description taken in conjunction with the accompanying drawings in which:
**FIGURE 1** is an illustration showing one embodiment of a SAR processing system according to the teachings of the present disclosure;
**FIGURE 2** is a diagram showing several components of the SAR processing system of FIGURE 1; and
**FIGURE 3** is a flowchart showing one embodiment of a series of actions that may be performed by SAR processor of FIGURE 1 to generate imagery from information received from radar receivers and location determining devices.

### DETAILED DESCRIPTION OF EXAMPLE EMBODIMENTS

It should be understood at the outset that, although example implementations of embodiments are illustrated below, various embodiments may be implemented using any number of techniques, whether currently known or not. The present disclosure should in no way be limited to the example implementations, drawings, and techniques illustrated below. Additionally, the drawings are not necessarily drawn to scale.

Imagery generated by radars using synthetic aperture radar (SAR) processing techniques may provide certain benefits over other imagery generating devices. For example, radars typically acquire information using electro-magnetic energy reflected from targets of interest. Upon reflection, electro-magnetic energy penetrates into objects to a certain degree according to the principle of penetration depth. The penetration depth of electro-magnetic energy is based upon several factors including the frequency of electro-magnetic energy, conductivity of the object, and the density of the target. Knowledge of these factors when processing reflected electro-magnetic energy may be used to derive useful information about internal features of targets. Thus, reflected electro-magnetic energy may include information about features internal to targets that is not typically obtained using conventional imagery generating devices, such as video cameras that generate imagery using visible light.

In some cases, it may be useful to determine internal features of static structures such as buildings. In some intelligence, surveillance, and reconnaissance (ISR) activities for example, it would be useful to generate imagery of buildings or other structures that may be situated in metropolitan or other civilian regions. Although SAR devices have been implemented for this purpose, the quality and resolution of imagery has been limited by the ability to acquire samples of reflected electro-magnetic energy with sufficient levels of spatial separation. With such difficulties, certain embodiments recognize that implementing location determining devices with multiple radar receivers may provide increased positional and/or orientational separation from one another for enhanced resolution of generated imagery due than what may be provided with conventional SAR-based systems.

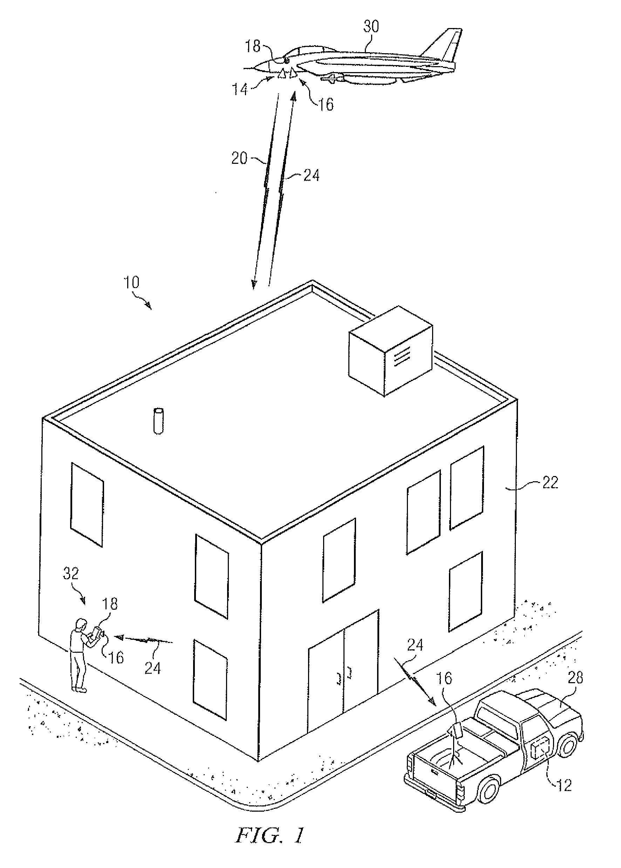

FIGURE 1 is an illustration showing one embodiment of a SAR processing system 10 according to the teachings of the present disclosure. SAR processing system 10 includes a SAR processor 12 communicating with a radar transmitter 14, multiple radar receivers 16, and a corresponding multiple number of location determining devices 18 configured with each radar receiver 16. Radar transmitter 14 generates electro-magnetic energy 20 that may be reflected from a target of interest that in this particular embodiment, is a building 22. Radar receivers 16 are distally located from each other and configured to receive reflected electro-magnetic energy 24 reflected from building 22. Each radar receiver 16 generates a return envelope representing the reflected electro-magnetic energy, which is then transmitted to SAR processor 12. SAR processor 12 receives these return envelopes and the location of each radar receiver 16 from location determining devices 18, and generates various forms of imagery of building 22 using SAR processing techniques.

Certain embodiment of SAR system 10 may provide benefits over other SAR processing systems in that enhanced spatial separation of radar receivers 16 may be provided that may in turn, provide enhanced quality and resolution of generated imagery. SAR processing techniques use multiple return envelopes to generate useful imagery that is often largely based upon the spatial separation from which these return envelopes have been acquired. In many conventional SAR processing systems, this spatial separation is provided by multi-element radar receivers such as active electronically scanned arrays (AESAs) having multiple elements with fixed spatial separation from one another, or by sequentially acquiring return envelopes over a period of time as the radar receiver is moved relative to the target. In either case, the spatial separation provided by these conventional SAR processing techniques is limited by their physical structure and/or mode of operation. The SAR system 10 according to the teachings of the present disclosure provide a solution to this problem by configuring multiple radar receivers 16 independently of one another and coordinating their positions and/or orientations using location determining devices 18 that are configured with each radar receiver 16.

Radar receivers 16 may be mounted on any suitable structure. In one embodiment, radar receivers 16 may be mounted on a portable platform such as a land-based vehicle 28 or an aircraft 30. In another embodiment, a radar receiver 16 and its associated location determining device 18 may be configured in a hand-held housing 32. Radar receiver 16 configured in hand-held housing 32 may be handled by a user for movement into any desired position around building 22 or other desired target of interest. Acquisition of return envelopes may be provided from generally stationary radar receivers 16 having a relatively fixed position relative to building 22, radar receivers 16 that are moving relative to building 22, or any combination of the two. SAR processor 12 may be configured on any platform that communicates with radar transmitter 14, radar receivers 16, and location determining devices 18. In the particular embodiment shown, SAR processor 12 is configured on the same land-based vehicle 28 in which at least one radar receiver 16 and its associated location determining device 18 are configured. In other embodiments, SAR processor 12 may be configured on a platform that is independent of any radar receiver 16 and associated location determining device 18. For example, SAR processor 12 may be configured on a stationary platform, such as at a military base that administers the operation of the various platforms on which the radar receivers 16 and associated location determining devices 18 are configured. Thus, personnel at the military base may view imagery generated by SAR processing system 10 and direct the various platforms configured with radar receivers 16 to perform certain routes around building 22 to tailor various aspects of information provided in the generated imagery.

SAR processing system 10 includes a single radar transmitter 14 or may be configured with multiple radar transmitters 14. In the particular embodiment shown, SAR processing system 10 includes a single radar transmitter 14 that is configured on the same platform in which one of the radar receivers 16 is configured, which in this case is aircraft 30. In another embodiment, In other embodiments, radar transmitter 14 may be configured independently of any radar receiver 16. For example, radar transmitter 14 may be configured on one aircraft while one or more radar receivers 16 are configured on other aircraft 30. As another example, radar transmitter 14 may be configured on a stationary platform, such as a trailer that is pulled to an appropriate position proximate building 22 prior to generation of electro-magnetic energy 20.

By use of a single radar transmitter 14, reflected energy received by radar receivers 16 may include certain characteristics that may be representative of the manner in which the incident electro-magnetic energy transmitted is reflected from various internal features of building 22. Radar transmitter 14 and radar receivers 16 generate image information by transmitting and receiving electro-magnetic energy at a single frequency or over a range of frequencies. In a particular embodiment, radar transmitter 14 and radar receivers 16 generate image information using electro-magnetic radiation at multiple frequencies ranging from 0.5 to 2.0 Giga-Hertz. Electro-magnetic radiation in this frequency range may provide sufficient penetration depth of structures, such as buildings to view their various internal characteristics, such as walls, objects in building 22, or other items of interest.

In one embodiment, SAR processing system 10 includes multiple radar transmitters 14 that are each configured with each of multiple radar receivers 16. In this manner, return evenlopes may be generated at non-concurrent time intervals by each platform that is configured with radar receivers 16. For example, land-based vehicle 28 may be configured with a radar transmitter 14 such that it may generate multiple return envelopes while driving by building 22 during a first time internal. At a later time interval not concurrent with the first time interval, aircraft 30 may generate multiple return envelopes using its own onboard radar transmitter 14. Following the later time interval, acquisition of return envelopes by land-based vehicle 28 and aircraft 30, SAR processor 12 may generate imagery according to information acquired in the return envelopes generated by land-based vehicle 28 and aircraft 30.

Radar receivers 16 generate return envelopes representing various characteristics of electro-magnetic energy reflected from building 22. For example, a radar receiver 16 may receive reflected electro-magnetic energy having characteristics, such as amplitude, phase shift, frequency shift, and/or time of arrival indicating the manner in which incident electro-magnetic energy has been reflected from building 22. Radar receiver 16 may generate return envelopes by digitizing the received electro-magnetic energy into a form that may be transmitted to, and processed by SAR processing system 10.

Location determining devices 18 transmit position and/or orientation information of its associated radar receiver 16 to SAR processor 12. Location determining devices 18 may include any technology that determines the position and/or orientation of its associated radar receiver 16 relative to building 22 and to each other. Examples of suitable location determine technologies include, but are not limited to, global positioning system (GPS) technologies including assisted-GPS (A-GPS) or differential GPS (DGPS), local positioning system (LPS) technologies including those that determine locations according to time-difference-of-arrival (TDOA) techniques, or hybrid positioning systems that use one or more combinations of the above.

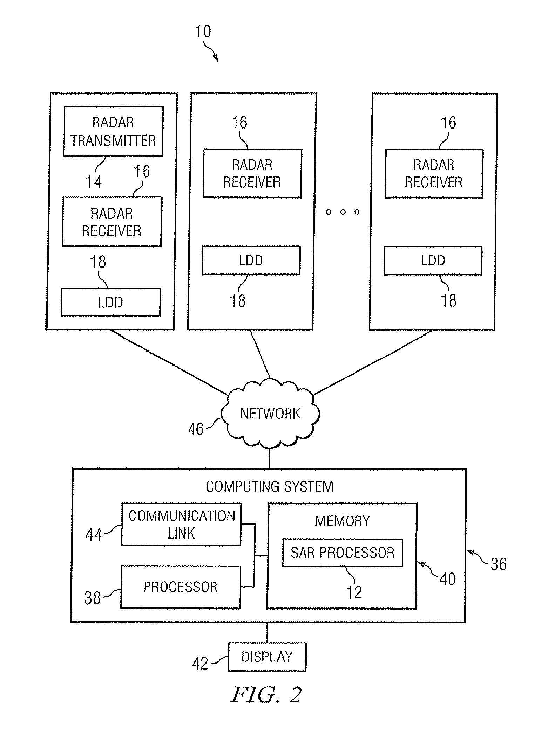

FIGURE 2 is a diagram showing several components of the SAR processing system 10 of FIGURE 1. SAR processing system 10 includes a computing system 36 having a processor 38, a memory 40 storing SAR processor 12, a display 42, and a communication link 44 that couples the radar receivers 16 and location determining devices 18 to SAR processor 12 through a network 46. SAR processor 12 processes return envelopes received from radar receivers 16 to form imagery of targets, such as building 22 that may include one or more of its internal features.

SAR processor 12 includes instructions stored in memory 40 and executable on processor 38. SAR processor 12 generates imagery according to return envelopes received from radar receivers 16 and position/orientation information received from their associated location determining devices 18. In one embodiment, SAR processor 12 generates imagery from return envelopes using a back projection technique in which return envelopes from radar receivers 16 are combined with each other using information provided by location determining devices 18 indicating the position and/or angle that return envelope has been received. In one embodiment, SAR processor 12 may use various back projection filters, such as spatial filters that filters return envelopes against one another according to the position and orientation of radar receivers 16 relative to each other, or doppler filters that filters return envelopes against one another according to the doppler shift in its received electro-magnetic energy. Several example back projection techniques are disclosed in Application No. 12/607,616, entitled "Radar Image Generation System", and filed on October 28, 2009, and is therefore incorporated by reference in its entirety.

Network 46 may be any type that provides communication of radar receivers 16 and location determining devices 18 with SAR processor 12. For example, may be a packet data network, such as a public or private network, a local area network (LAN), a metropolitan area network, a wide area network (WAN), a wireline or wireless network, a global communication network, an optical network, a satellite network, an enterprise intranet, an intranet, a virtual private network (VPN), the Internet, or any combination of the preceding.

Computing system 36 may be may generally be adapted to execute any of the known OS2, UNIX, Mac-OS, Linux, and Windows Operating Systems or other operating systems. Although computing system 36 is shown including a processor 38, a memory 40, a display 42, and a communication link 44 for communicating with radar receivers 16 and location determining devices 18, other embodiments of computing system 36 may include more, less, or other component parts.

Embodiments of SAR processor 12 may include logic contained within a medium. Logic may include hardware, software, and/or other logic. Logic may be encoded in one or more tangible media and may perform operations when executed by processor 38. Certain logic, such as its processor, may manage the operation of computing system 36. Examples of processor 38 may include one or more microprocessors, one or more applications, and/or other logic. Certain logic may include a computer program, software, computer executable instructions, and/or instructions capable being executed by computing system 36. In particular embodiments, the operations of the embodiments may be performed by one or more computer readable media storing, embodied with, and/or encoded with a computer program and/or having a stored and/or an encoded computer program. The logic may also be embedded within any other suitable medium without departing from the scope of the invention.

Memory 40 may comprise one or more tangible, computer-readable, and/or computer-executable storage medium. Suitable examples may include computer memory (for example, Random Access Memory (RAM) or Read Only Memory (ROM)), mass storage media (for example, a hard disk), removable storage media (for example, a Compact Disk (CD) or a Digital Video Disk (DVD)), database and/or network storage (for example, a server), and/or other computer-readable medium.

Although the illustrated embodiment provides one embodiment of a computing system 36 that may be used with other embodiments, such other embodiments may additionally utilize computing systems other than general purpose computers as well as general purpose computers without conventional operating systems. Additionally, certain embodiments of computing system 36 may also employ multiple computing systems networked together in a computer network. For example, a particular computing system may include multiple computing systems that are networked together through an local area network (LAN) or an intranet. Embodiments may also be used with a combination of separate computer networks each linked together by a private or a public network.

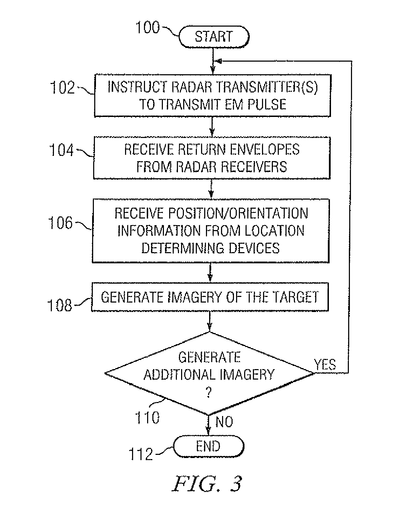

FIGURE 3 is a flowchart showing one embodiment of a series of actions that may be performed by SAR processor 12 to generate imagery from information received from radar receivers 16 and location determining devices 18. In act 100, the process is initiated.

In act 102, SAR processor 12 instructs one or more radar transmitters 14 to transmit electro-magnetic energy toward a target of interest, which according to the example shown in FIGURE 1, is a building 22. In one embodiment, radar transmitter 14 transmits a pulse of electro-magnetic energy having a predefined amplitude, frequency, and duration that provides sufficient penetration depth into targets, such as building 22 and supplies ample reflected electro-magnetic energy for detection by radar receivers 16.

In one embodiment, a single radar transmitter 14 may be used to transmit electro-magnetic energy 20 that is received by multiple radar receivers 16 that have been synchronized with one another. In another embodiment, multiple radar transmitters 14 may be implemented such that radar receivers 16 may generate return envelopes in a non-concurrent manner with one another.

In act 104, SAR processor 12 receives return envelopes from multiple radar receivers 16 positioned at various distances and angular orientations from building 22. Return envelopes include information representing various parameters associated with electro-magnetic energy reflected from the target that may include, for example, its amplitude, its phase shift, its frequency shift, and/or its time of arrival. In one embodiment, received electro-magnetic energy may be digitized using an analog-to-digital converter (ADC) or other similar mechanism to form a digital signal that may be transmitted over network 46 and processed by SAR processor 12.

If radar receivers 16 receive electro-magnetic energy 24 generated by a single radar transmitter 14, they may be synchronized with the transmitted electro-magnetic energy 22 such that SAR processor 12 may obtain propagation delay information in the return envelopes. Radar receivers 16 may be synchronized in any suitable manner. In one embodiment, synchronization of radar receivers 16 may be provided through timing signals received from one or more GPS satellites. In another embodiment, radar receivers 16 may be synchronized by detecting electro-magnetic energy pulses transmitted from radar transmitter 14. In another embodiment, SAR processor 12 may simultaneously transmit a synchronization signal through network 46 to all radar receivers 16 such that subsequent reflected electro-magnetic energy received by radar receivers 16 may be time-wise synchronized to a common source.

In act 106, SAR processor 12 receives position and/or orientation information from location determining devices 18 associated with radar receivers 16. From this information, SAR processor 12 may convert position/orientation information from location determining devices 18 into vector form for comparison of multiple return envelopes. For example, position information received from location determining devices 18 may include latitude, longitude, and altitude information. SAR processor 12 may convert this information into vector form such that analysis of the multiple return envelopes may be performed in three dimensional Cartesian space.

In act 108, SAR processor 12 generates imagery of the target according to the received return envelopes and their associated position and/or orientation using information provided by location determining devices 18. In one embodiment, SAR processor 12 generates imagery of the target using a back projection process.

In act 110, SAR processor 12 may generate additional imagery of the target by repeating acts 102 through 108 in which the one or more radar transmitters 14 are instructed to transmit electro-magnetic energy at the same or a different frequency. Certain embodiments that process reflected electro-magnetic energy at differing frequencies may be useful for enhancing the resulting imagery and/or determining various internal features of the target. For an example which the target is a building 22, it may include materials, such as brick, wood, or metallic structures such as electrical wiring whose reflectivity may vary based upon the frequency of incident electro-magnetic energy. Thus, by analyzing electro-magnetic energy reflected from building 22 at varying frequencies, variations in reflected electro-magnetic energy due to variations in the frequency of electro-magnetic energy may be used to enhance the resulting imagery of various internal features of building 22.

If no enhancement or additional generation of imagery is desired, the process ends in act 112.

Modifications, additions, or omissions may be made to SAR processing system 10 without departing from the scope of the invention. The components of SAR processing system 10 may be integrated or separated. For example, computing system 36 that executes SAR processor 12 may be an integral component of one radar receiver 16 or computing system 36 may be configured separately from any radar receiver 16 of SAR processing system 10. Moreover, the operations of SAR processing system 10 may be performed by more, fewer, or other components. For example, radar receivers 16 on certain portable platforms may be configured with servos to mechanically adjust its relative orientation for selective acquisition of electro-magnetic energy at desired angles of the target relative to its boresight axis. Additionally, operations of SAR processor 12 may be performed using any suitable logic comprising software, hardware, and/or other logic. As used in this document, "each" refers to each member of a set or each member of a subset of a set.

Although the present invention has been described with several embodiments, a myriad of changes, variations, alterations, transformations, and modifications may be suggested to one skilled in the art, and it is intended that the present invention encompass such changes, variations, alterations, transformation, and modifications as they fall within the scope of the appended claims.

## Claims

1. A synthetic aperture radar (SAR) processing system (10) comprising:
a synthetic aperture radar (SAR) processor (12) comprising instructions stored in a memory (40) and executable on a computing system, the SAR processor (12) operable to communicate with a plurality of radar receivers (16) that are spatially separated from one another and are each configured with a location determining device (18), SAR processor (12) operable to:
receive a plurality of return envelopes from the plurality of radar receivers (16), each return envelope representing electro-magnetic energy reflected from a target (22);
receive, from each location determining device (18), a location signal indicating a position of its associated radar; and
generate imagery of the target (22) according to the plurality of received envelopes and the position associated with each received envelope.

2. The synthetic aperture radar system (10) of Claim 1, further comprising a single radar transmitter (14) operable to generate the electro-magnetic energy that is received by the plurality of radar receivers (16), the plurality of radar receivers (16) being synchronized with one another.

3. The synthetic aperture radar system (10) of Claim 1, further comprising a plurality of radar transmitters (14) operable to generate the electro-magnetic energy that is received by the plurality of radar receivers (16), the plurality of return envelopes being received non-concurrently from one another.

4. The synthetic aperture radar system (10) of Claim 2 or Claim 3, wherein the radar transmitter (14) is operable to generate the electro-magnetic energy at a plurality of different frequencies.

5. The synthetic aperture radar system (10) of Claim 1, or of any of Claims 2 to 4, wherein at least one radar receiver (16) and its associated location determining device (18) are configured in a land-based vehicle (28), or an aircraft (30), or in a hand-held housing.

6. The synthetic aperture radar system (10) of Claim 1, or of any of Claims 2 to 5, wherein the SAR processor (12) is operable to:
receive, from each location determining device (18), an orientation signal indicating an orientation of its associated radar relative to the target (22); and
generate the imagery of the target (22) according to the orientation associated with each received envelope.

7. The synthetic aperture radar system (10) of Claim 1, or of any of Claims 2 to 6, wherein the target (22) comprises a building, the SAR processor (12) operable to:
receive the plurality of return envelopes each representing electro-magnetic energy generated at a plurality of different frequencies ranging from 0.5 to 2.0 Giga-Hertz; and
generate imagery of one or more internal features of the building according to the plurality of return envelopes.

8. A synthetic aperture radar processing method comprising:
receiving a plurality of return envelopes from a plurality of radar receivers (16), each return envelope representing electro-magnetic energy reflected from a target (22);
receiving, from each of a plurality of location determining devices (18) that are each configured with each radar receiver (16), a location signal indicating a position of its associated radar; and
generating imagery of the target (22) according to the plurality of received envelopes and the position associated with each received envelope.

9. The method of Claim 8, further comprising:
generating the electro-magnetic energy using a single radar transmitter (14);
and
synchronizing the plurality of radar receivers (16) with one another.

10. The method of Claim 8, further comprising:
generating the electro-magnetic energy using a plurality of radar transmitters (16); and
receiving the plurality of return envelopes non-concurrently with one another.

11. The method of Claim 9 or Claim 10, further comprising generating the electro-magnetic energy at a plurality of different frequencies.

12. The method of Claim 8, or the method of any of Claims 9 to 11, wherein at least one radar receiver (16) and its associated location determining device (18) are configured in a land-based vehicle (28), or an aircraft (30), or in a hand-held device.

13. The method of Claim 8, or the method of any of Claims 9 to 12, further comprising:
receiving, from each location determining device (18), an orientation signal indicating an orientation of its associated radar relative to the target (22); and
generating the imagery of the target (22) according to the orientation associated with each received envelope.

14. The method of Claim 8, or the method of any of Claims 9 to 13, further comprising:
receiving the plurality of return envelopes each representing electro-magnetic energy generated at a plurality of different frequencies ranging from 0.5 to 2.0 Giga-Hertz; and
generating imagery of one or more internal features of a building according to the plurality of return envelopes, the building comprising the target (22).

15. A computer readable medium including code for performing synthetic aperture radar processing according to a method of any of Claims 8 to 14.
